# EUROPÄISCHE PATENTSCHRIFT

(11) **EP 2 228 181 B1**
(45) Veröffentlichungstag und Bekanntmachung des Hinweises auf die Patenterteilung: **20.07.2011**
(21) Anmeldenummer: 10000010.8
(22) Anmeldetag: 04.01.2010
(51) Int. Cl.: B25J 15/00, B65G 47/90

(54) **Produktgreifer**
Product gripper
Dispositif de préhension de produit

(30) Priorität: 09.03.2009 DE 102009012332
(43) Veröffentlichungstag der Anmeldung: 15.09.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 2 168 892
- EP-A2- 0 508 256
- EP-A2- 1 921 030
- WO-A1-2009/029696
- DE-A1- 19 644 158
- GB-A- 2 448 947

## Beschreibung

Die Erfindung betrifft einen Produktgreifer zum Aufnehmen eines Produkts, mit zwei Schaufelblättern, einem Antriebsmittel, um die Schaufelblätter zwischen einer ersten Position, in welcher die Schaufelblätter auf gegenüberliegenden Seiten des aufzunehmenden Produkts auf eine Auflage für das aufzunehmende Produkt aufsetzbar sind, und einer zweiten Position zu bewegen, in welcher sich die Schaufelblätter zumindest teilweise unter dem aufzunehmenden Produkt befinden, und einem Niederhalter zum Fixieren des aufzunehmenden Produkts, während die Schaufelblätter darunter bewegt werden, wobei der Niederhalter oberhalb einer durch die Schaufelblätter definierten Schaufelblattebene angeordnet ist.

Derartige Produktgreifer kommen beispielsweise in der Lebensmittelindustrie zum Einsatz, um Lebensmittelprodukte von einem ersten Fördermittel auf ein zweites Fördermittel umzusetzen, zu sortieren oder in eine Verpackung einzubringen. Typischerweise sind die Produktgreifer an dem beweglichen Teil eines Roboters montiert.

Bei einem bekannten Produktgreifer der eingangs genannten Art sind die Schaufelblätter starr an einer Rahmenstruktur des Produktgreifers angebracht, und der Niederhalter umfasst ein elastisch verformbares Bauteil, dessen dem aufzunehmenden Produkt zugewandte Unterseite im unbeladenen Zustand des Produktgreifers einen Abstand zu der Schaufelblattebene aufweist, der geringer als die Höhe des aufzunehmenden Produkts ist, so dass beim Absenken des Produktgreifers auf das aufzunehmende Produkt zuerst das elastisch verformbare Bauteil an der Produktoberseite angreift und anschließend die Schaufelblätter auf der Produktauflage aufsetzen. Dies hat den Nachteil, dass sich der Niederhalter an dem Produkt abstützt, während der Produktgreifer insgesamt weiter abgesenkt wird, um die Schaufelblätter mit der Produktauflage in Kontakt zu bringen.

In der EP-A-2 168 892 ist ein Produktgreifer gemäß dem Oberbegriff des Anspruchs 1 offenbart, bei welchem zwei hydraulisch oder pneumatisch betätigbare Andrückzylinder eine steuerbare Niederhaltereinrichtung bilden.

Der Erfindung liegt die Aufgabe zugrunde, einen Produktgreifer zu schaffen, der ein schonenderes Produkthandling ermöglicht.

Zur Lösung der Aufgabe ist ein Produktgreifer mit den Merkmalen des Anspruchs 1 vorgesehen.

Der erfindungsgemäße Produktgreifer zeichnet sich insbesondere durch einen Rampenmechanismus aus, durch welchen die Bewegung der Schaufelblätter relativ zueinander mit einer Bewegung des Niederhalters relativ zu der Schaufelblattebene gekoppelt ist.

Der Erfindung liegt mit anderen Worten der allgemeine Gedanke zugrunde, das Ineingriffbringen von Niederhalter und aufzunehmenden Produkt von der Absenkbewegung des Produktgreifers zu entkoppeln und stattdessen mit der Bewegung der Schaufelblätter zu verknüpfen. Der Niederhalter wird mit anderen Worten nicht dadurch mit dem aufzunehmenden Produkt in Eingriff gebracht, dass der Produktgreifer auf die Produktauflage abgesenkt wird, sondern durch das Zusammenfahren der Schaufelblätter aus ihrer ersten Position in ihre zweite Position.

Die Entkopplung des Andrückens des Niederhalters an das aufzunehmende Produkt von der Absenkbewegung des Produktgreifers und die damit einhergehende Tatsache, dass der Abstand zwischen der Unterseite des Niederhalters und der Schaufelblattebene stets größer oder zumindest gleich der Höhe eines aufzunehmenden Produkts ist, ermöglicht ein schonenderes Handling des Produkts, da sich der Produktgreifer bei seinem Absenken auf die Produktauflage nicht an dem Produkt abstützt.

Vorteilhafte Ausbildungen der Erfindung sind den Unteransprüchen, der Beschreibung und der Zeichnung zu entnehmen.

Um sicherzustellen, dass ein aufzunehmendes Produkt wirksam fixiert ist und durch die sich bewegenden Schaufelblätter nicht verschoben wird, ist der Rampenmechanismus bevorzugt so ausgebildet, dass der Niederhalter mit dem aufzunehmenden Produkt in Eingriff gerät, bevor sich die Schaufelblätter darunter bewegen.

Vorteilhafterweise ist der Rampenmechanismus so ausgebildet, dass er eine Rotation oder eine Translation jeweils in eine Translation umsetzt. Mit anderen Worten kann die Absenkbewegung des Niederhalters unter Zwischenschaltung des Rampenmechanismus entweder durch eine Drehbewegung oder durch eine lineare Bewegung erreicht werden.

Gemäß einer ersten Ausführungsform umfasst der Rampenmechanismus zwei sich um eine Drehachse relativ zueinander verdrehende Teile. Die Drehachse ist vorzugsweise senkrecht zur Schaufelblattebene orientiert.

Ein erster Teil des Rampenmechanismus kann einen, insbesondere konzentrisch mit der Drehachse angeordneten, Rampenring des Niederhalters umfassen. Grundsätzlich ist es möglich, dass der Rampenring lediglich eine Rampe aufweist. Eine gleichmäßigere Kräfteverteilung wird jedoch erreicht, wenn der Rampenring zwei Rampen aufweist, die auf gegenüberliegenden Seiten der Drehachse angeordnet sind.

Ein zweiter Teil des Rampenmechanismus kann mit einem Hebelarm verbunden sein, welcher, insbesondere um die Drehachse, verschwenkbar ist. Der Hebelarm kann Bestandteil eines Antriebsmechanismus sein, welcher dazu dient, die Schaufelblätter aus ihrer ersten Position in ihre zweite Position und umgekehrt zu bewegen.

Bevorzugt umfasst der zweite Teil des Rampenmechanismus mindestens einen zur Schaufelblattebene weisenden Nocken, welcher mit dem ersten Teil des Rampenmechanismus in Eingriff steht. Bei einer Verschwenkung des Hebelarms kann der Nocken beispielsweise auf eine Rampe des Rampenrings auflaufen und den Niederhalter dadurch in Richtung der Schaufelblattebene drücken. Auch hier gilt, dass ein einzelner Nocken grundsätzlich ausreichend ist, um den Niederhalter mit einem aufzunehmenden Produkt in Eingriff zu bringen. Vorteilhafterweise sind aber zwei, auf gegenüberliegenden Seiten der Drehachse angeordnete, Nocken vorgesehen, die mit zwei entsprechenden Rampen des Rampenrings zusammenwirken.

Um ein Auflaufen des oder jedes Nockens auf die Rampe(n) des Rampenrings zu erleichtern, weist der oder jeder Nocken bevorzugt an einer auf einen ersten Teil des Rampenmechanismus auflaufenden Seite eine Schrägfläche auf.

Gemäß einer zweiten Ausführungsform umfasst der Rampenmechanismus zwei sich linear zueinander verschiebende und zumindest zeitweise über Schrägflächen miteinander in Eingriff stehende Teile. In diesem Fall setzt der Rampenmechanismus als keine Drehbewegung, sondern eine erste Linearbewegung in eine zweite Linearbewegung um.

Ein erster Teil des Rampenmechanismus kann mindestens eine an dem Niederhalter ausgebildete Schrägfläche umfassen. Dagegen kann ein zweiter Teil des Rampenmechanismus mit einem der Schaufelblätter fest verbunden sein. Zur Erreichung einer gleichmäßigeren Kräfteverteilung ist bevorzugt mit jedem Schaufelblatt jeweils ein zweiter Teil des Rampenmechanismus fest verbunden.

Der oder jeder zweite Teil des Rampenmechanismus kann beispielsweise durch ein sich im Wesentlichen parallel oder schräg zur Schaufelblattebene erstreckendes Rampenelement gebildet sein, z.B. eine Stange, das an seinem dem zugeordneten Schaufelblatt abgewandten Ende eine Schrägfläche aufweist.

Vorteilhafterweise ist die Abmessung der Schrägfläche des Rampenelements parallel zur Schaufelblattebene gesehen kürzer als die Distanz zwischen der ersten und zweiten Position der Schaufelblätter. Auf diese Weise ist der Niederhalter auf ein aufzunehmendes Produkt niedergedrückt, bevor die Schaufelblätter mit diesem in Eingriff geraten, und das oder jedes Rampenelement schiebt sich beim Zusammenfahren der Schaufelblätter so weit über den Niederhalter, dass die Schrägflächen des Niederhalters und des oder jedes Rampenelements außer Eingriff geraten und der Niederhalter in seiner niedergedrückten Lage blockiert ist. Der Niederhalter kann sich folglich nicht unbeabsichtigt von einem aufgenommenen Produkt lösen.

Um eine Verdrehung des Niederhalters zu verhindern und insbesondere bei der ersten Ausführungsform eine zuverlässige Funktion des Rampenmechanismus sicherzustellen, ist der Niederhalter vorteilhafterweise drehfest an einer Rahmenstruktur des Produktgreifers angebracht.

Des Weiteren ist der Niederhalter bevorzugt entgegen der Rückstellkraft eines Federelements auf die Schaufelblattebene zu bewegbar. Beim Zusammenfahren der Schaufelblätter und dem daraus resultierenden Ineingriffbringen des Niederhalters mit einem aufzunehmenden Produkt wird das Federelement also gespannt, wohingegen es sich beim Auseinanderfahren der Schaufelblätter wieder entspannen kann, um den Niederhalter und das aufgenommene Produkt außer Eingriff zu bringen. Bei dem Federelement kann es sich beispielsweise um eine Zugfeder handeln.

Die Verwendung eines solchen Federelements ist insbesondere dann von Vorteil, wenn die Teile des Rampenmechanismus lediglich einseitig miteinander zusammenwirken, wie im Fall von aufeinander auflaufenden Schrägflächen. Grundsätzlich ist es aber auch denkbar, die Teile des Rampenmechanismus über Kulissenführungen miteinander zu koppeln, wodurch sowohl die Bewegung des Niederhalters auf die Schaufelblattebene zu, als auch die Bewegung des Niederhalters von der Schaufelblattebene weg ohne Federelement erreicht werden könnte.

Nachfolgend wird die Erfindung anhand vorteilhafter Ausführungsformen rein beispielhaft unter Bezugnahme auf die beigefügte Zeichnung beschrieben. Es zeigen:
- Fig. 1: eine Seitenansicht eines erfindungsgemäßen Produkt- greifers gemäß einer ersten Ausführungsform vor der Aufnahme eines Produkts;
- Fig. 2: eine Seitenansicht des Produktgreifers von Fig. 1 nach der Aufnahme des Produkts;
- Fig. 3 bis 5: perspektivische Ansichten des Produktgreifers von Fig. 1 vor der Aufnahme des Produkts;
- Fig. 6: eine weitere Seitenansicht des Produktgreifers von Fig. 1 vor der Aufnahme des Produkts;
- Fig. 7: eine Seitenansicht eines erfindungsgemäßen Produkt- greifers gemäß einer zweiten Ausführungsform vor der Aufnahme eines Produkts;
- Fig. 8: eine Seitenansicht des Produktgreifers von Fig. 7 nach der Aufnahme eines Produkts;
- Fig. 9: eine perspektivische Ansicht des Produktgreifers von Fig. 7 nach der Aufnahme eines Produkts;
- Fig. 10 und 11: eine perspektivische Ansichten des Produktgreifers von Fig. 7 vor der Aufnahme eines Produkts; und
- Fig. 12: eine weitere Seitenansicht des Produktgreifers von Fig. 7 vor der Aufnahme eines Produkts.

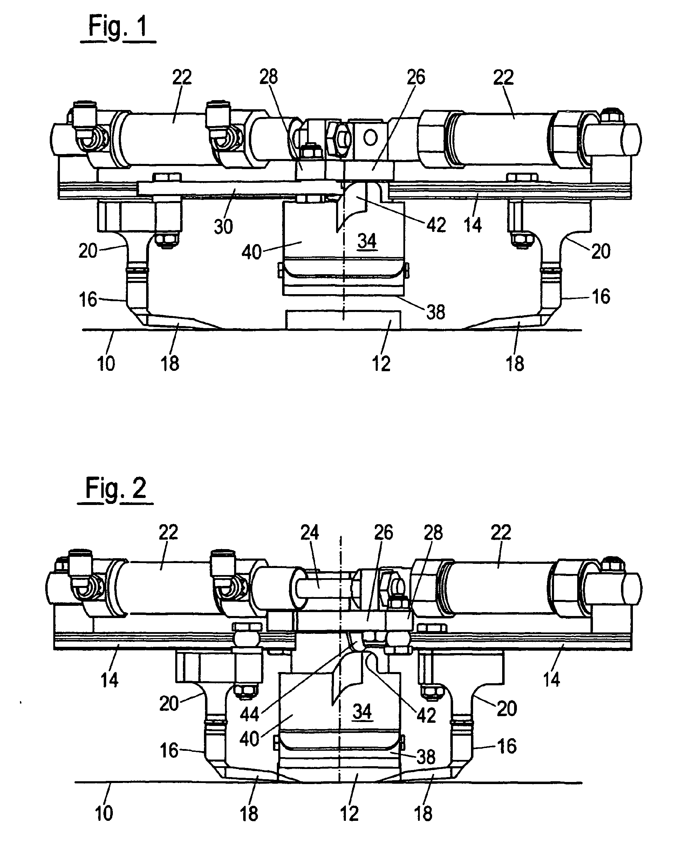

Fig. 1 bis 6 zeigen eine erste Ausführungsform eines Produktgreifers, der, beispielsweise als Teil eines nicht dargestellten Roboters, dazu vorgesehen ist, ein auf einer Produktauflage 10, z.B. einem Eintrageband, liegendes Produkt 12, z.B. ein Lebensmittelprodukt, aufzunehmen und an einem anderen Ort abzulegen.

Der Produktgreifer umfasst eine Rahmenstruktur 14, an deren Unterseite zwei Schaufeln 16 angebracht sind, welche aus einer ersten Position, in der die Schaufeln 16 einen so großen Abstand zueinander aufweisen, dass sie seitlich neben dem Produkt 12 auf die Produktauflage 10 aufgesetzt werden können (Fig. 1), in eine zweite Position bewegbar sind, in der die Schaufeln 16 einen so geringen Abstand zueinander aufweisen, dass sie das Produkt 12 zumindest teilweise untergreifen (Fig. 2).

Jede Schaufel 16 umfasst ein Schaufelblatt 18, das an einem Schaufelblattträger 20 angebracht, z.B. angeschraubt, ist. Die Schaufelblattträger 20 sind verschiebbar an der Rahmenstruktur 14 gelagert. Die Schaufelblattträger 20 sind starr ausgebildet, so dass die Schaufelblätter 18 stets einen fest vorgegebenen Abstand zu der Rahmenstruktur 14 aufweisen. Die Schaufelblätter 18 liegen in einer Ebene, welche nachfolgend als Schaufelblattebene bezeichnet wird.

Zur Bewegung der Schaufeln 16 aus der ersten Position in die zweite Position und umgekehrt ist ein Antriebsmechanismus vorgesehen, welcher zwei pneumatisch oder hydraulisch betätigbare Zylinder 22 umfasst, in denen jeweils ein Kolben 24 verschiebbar gelagert ist. Die Kolben 24 sind mit einem Hebelarm 26 verbunden, welcher mittig um eine zur Schaufelblattebene senkrechte Drehachse verdrehbar an der Rahmenstruktur 14 gelagert ist. An seinem einen Ende 28 ist der Hebelarm 26 über einen verschwenkbaren Verbindungsarm 30 mit der einen Schaufel 16 verbunden. An seinem anderen Ende 28 ist der Hebelarm 26 über einen entsprechenden Verbindungsarm 30 mit der anderen Schaufel 16 verbunden.

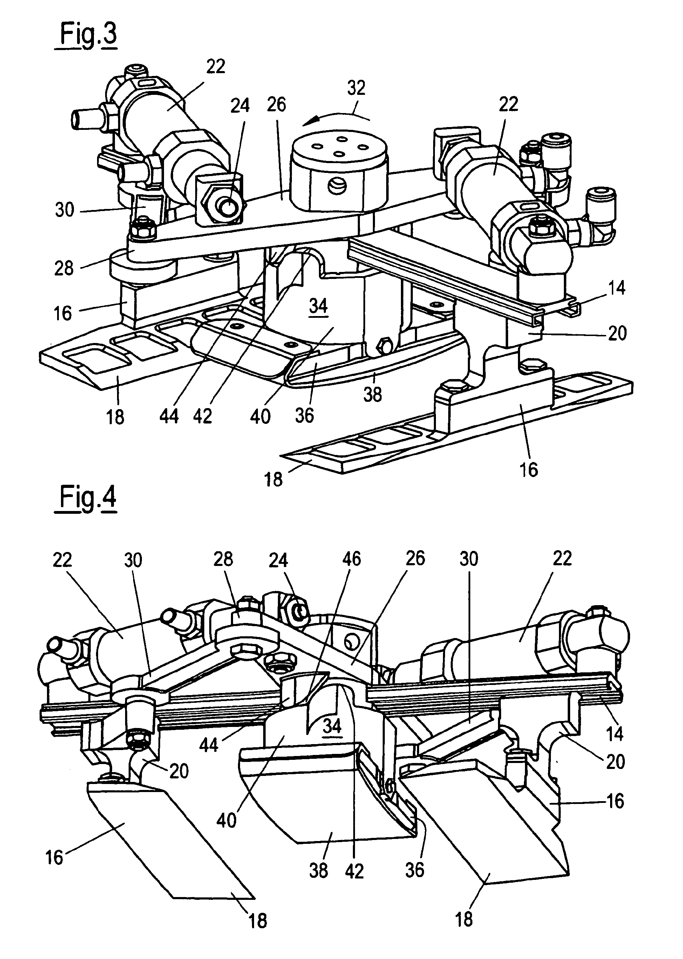

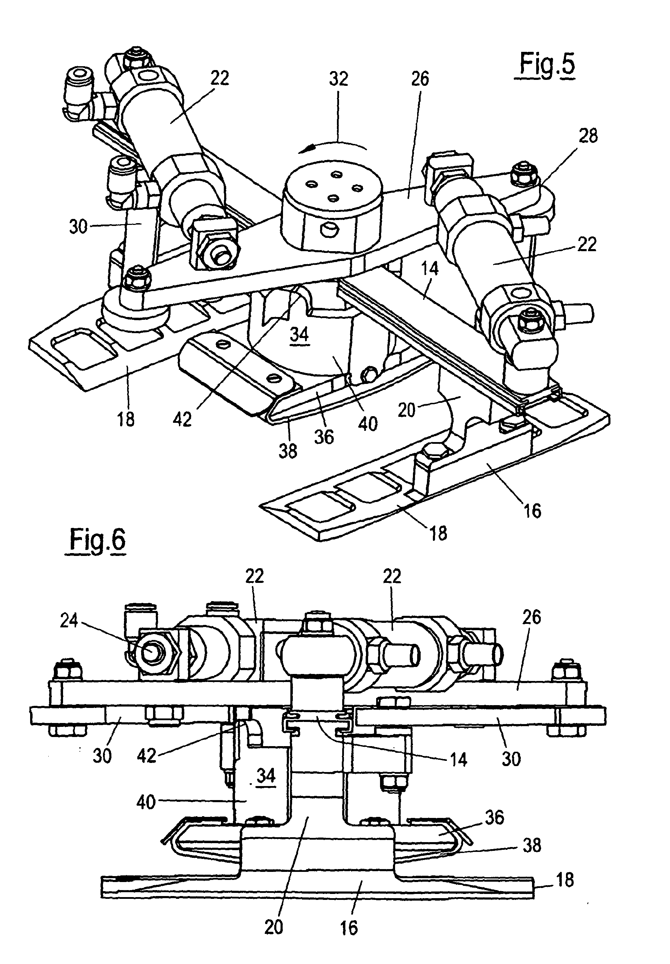

Sind die Kolben 24 in ihren jeweiligen Zylinder 22 eingefahren, so befinden sich die Schaufeln 16 in ihrer ersten Position (Fig. 1 und 3 bis 6). Werden die Zylinder 22 unter Druck gesetzt, so bewirken die aus den Zylindern 22 herausfahrenden Kolben 24 eine Verdrehung des Hebelarms 26 (in Fig. 3 und 5 entgegen dem Uhrzeigersinn, angedeutet durch den Pfeil 32), durch welche die Schaufeln 16 in ihre zweite Position gebracht werden und der Produktgreifer geschlossen wird (Fig. 2). Das Öffnen des Produktgreifers, d.h. die Bewegung der Schaufeln 16 aus ihrer zweiten Position in ihre erste Position, erfolgt in umgekehrter Weise, indem die Kolben 24 wieder in ihren jeweiligen Zylinder 22 hineingefahren werden.

Mittig zwischen den Schaufeln 16 ist ein Niederhalter 34 an der Unterseite der Rahmenstruktur 14 angebracht, welcher dazu dient, das aufzunehmende Produkt 12 zu fixieren und ein Verrutschen des Produkts 12 zu verhindern, während die Schaufelblätter 18 unter das Produkt 12 geschoben werden.

An seiner Unterseite weist der Niederhalter 34 eine zur Schaufelblattebene parallel orientierte rechteckige Kunststoffplatte 36 auf, an deren Schmalseiten die Enden eines Bandgurts 38 befestigt sind. Der Bandgurt 38 erstreckt sich entlang der Unterseite der Kunststoffplatte 36 und ist so locker montiert, dass er im unbeladenen Zustand des Produktgreifers etwas durchhängt und sich im beladenen Zustand des Produktgreifers an die Oberseitenkontur des aufgenommenen Produkts anpassen kann. Es versteht sich von selbst, dass die Anpassungsfähigkeit des Bandgurts 38 um so besser ist, je weicher das Material ist.

Die Kunststoffplatte 36 ist an der zur Schaufelblattebene weisenden unteren Stirnseite eines Rampenrings 40 des Niederhalters 34 montiert, welcher konzentrisch mit der Drehachse des Hebelarms 26 angeordnet ist. An der der Schaufelblattebene abgewandten und dem Hebelarm 26 zugewandten oberen Stirnseite des Rampenrings 40 sind zwei Rampen 42 ausgebildet, die bezüglich der Drehachse des Hebelarms 26 um 180° zueinander versetzt sind, mit anderen Worten also auf gegenüberliegenden Seiten der Drehachse angeordnet sind.

Die Rampen 42 des Rampenrings 40 wirken mit Nocken 44 zusammen, die an der Unterseite des Hebelarms 26 ausgebildet sind. An seiner auf die entsprechende Rampe 42 auflaufenden Seite weist jeder Nocken 44 eine Schrägfläche 46 auf.

Beim Schließen des Produktgreifers zur Aufnahme eines Produkts 12 werden die Schaufeln 16 unter Verdrehung des Hebelarms 26 zusammengefahren. Dabei bewirkt die Verdrehung des Hebelarms 26 nicht nur eine Bewegung der Schaufeln 16 sondern gleichzeitig auch, dass die an dem Hebelarm 26 ausgebildeten Nocken 44 auf ihre jeweilige Rampe 42 des Rampenrings 40 auflaufen. Hierdurch wird der Niederhalter 34 in Richtung der Schaufelblattebene bewegt, mit anderen Worten also auf das aufzunehmende Produkt 12 abgesenkt.

Das Absenken des Niederhalters 34 erfolgt dabei entgegen der Rückstellkraft einer zwischen den Niederhalter 34 und die Rahmenstruktur 14 geschaltete Zugfeder (nicht gezeigt). Die Zugfeder wird mit anderen Worten während des Schließens des Produktgreifers und Absenkens des Niederhalters 34 gespannt. Die Rückstellkraft der Zugfeder sorgt dafür, dass sich der Niederhalter 34 wieder von der Schaufelblattebene weg bewegt, d.h. also aufwärts bewegt, wenn sich der Hebelarm 26 zum Öffnen des Produktgreifers in die umgekehrte Richtung dreht.

Die Höhen der Rampen 42 des Rampenrings und der Nocken 44 des Hebelarms 26 sind so gewählt, dass der aus dem Auflaufen der Nocken 44 auf die Rampen 42 resultierende Hub des Niederhalters 34 ausreicht, um den Niederhalter 34 so weit abzusenken bzw. niederzudrücken, dass er mit der Oberseite eines aufzunehmenden Produkts 12 in Eingriff gerät und eine gewisse Fixierkraft auf das Produkt ausübt.

Ferner sind die Steigungsverläufe der Rampen 42 und/oder der Schrägflächen 46 der Nocken 44 so gewählt, dass der Niederhalter 34 ein aufzunehmendes Produkt 12 bereits fixiert, wenn die Schaufelblätter 18 mit dem Produkt 12 in Eingriff geraten und beginnen, sich unter dieses zu bewegen. Umgekehrt bedeutet dies, dass beim Öffnen des Produktgreifers erst die Schaufelblätter 18 und das Produkt 12 außer Eingriff geraten und danach der Niederhalter 34 das Produkt 12 freigibt.

Grundsätzlich sind aber auch andere Steigungsverläufe der Rampen 42 bzw. der Schrägflächen 46 der Nocken 44 denkbar, beispielsweise derart, dass der Niederhalter 34 erst dann mit dem Produkt 12 in Eingriff gerät, wenn sich die Schaufelblätter 18 bereits unter dieses geschoben haben. Dies bedeutet umgekehrt, dass beim Öffnen des Greifers erst der Niederhalter 34 das Produkt 12 freigibt und danach die Schaufelblätter 18 und das Produkt 12 außer Eingriff geraten.

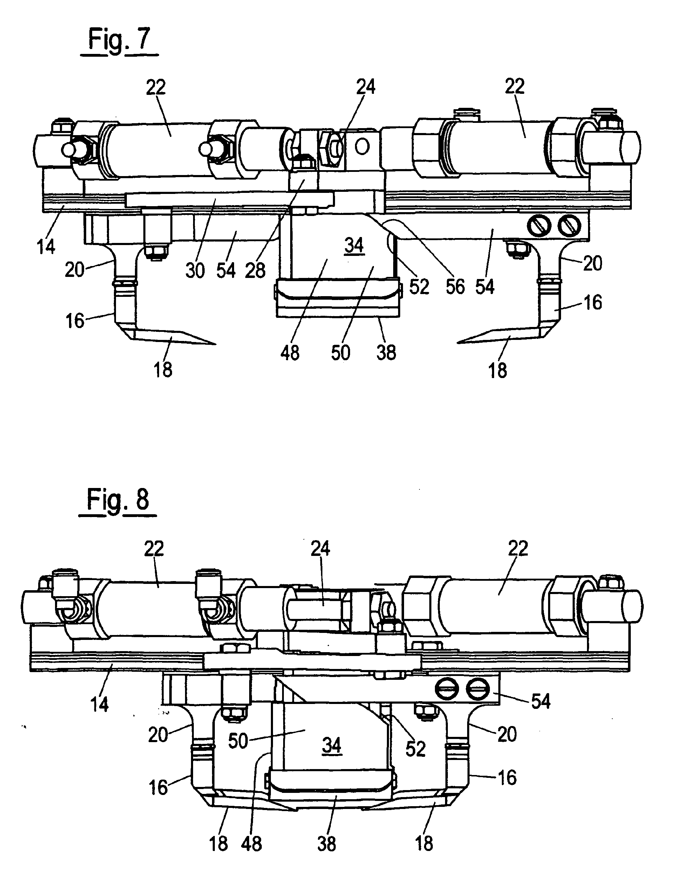

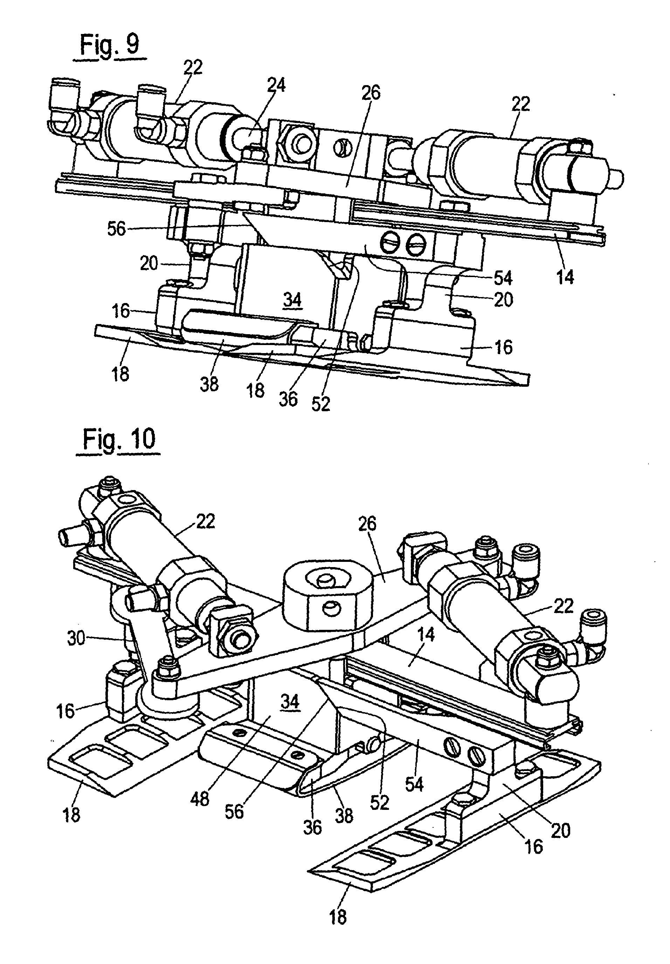

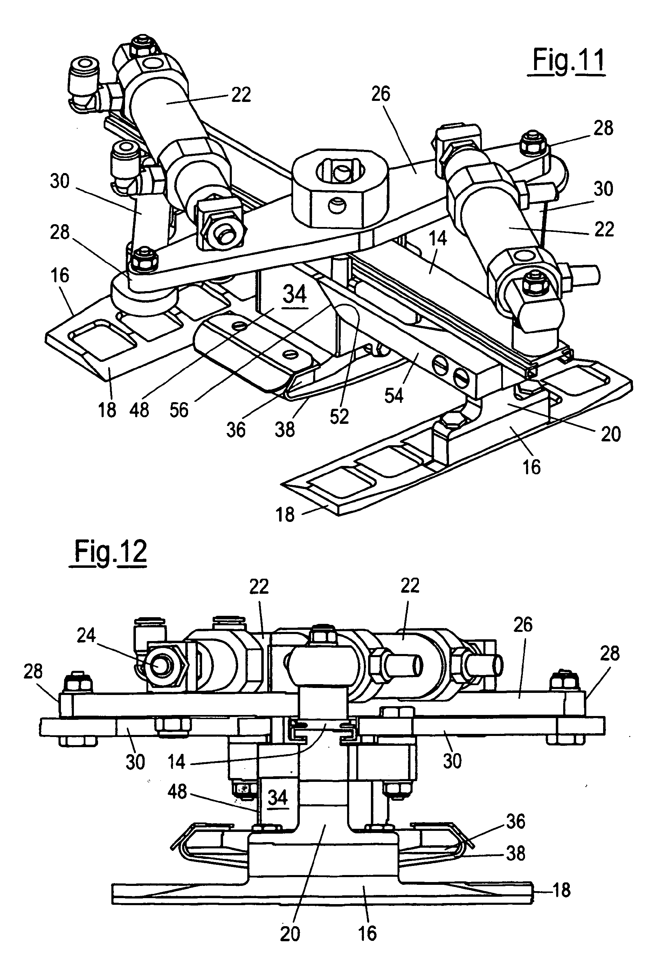

In Fig. 7 bis 12 ist eine zweite Ausführungsform eines Produktgreifers dargestellt, welche der voranstehend beschriebenen ersten Ausführungsform weitgehend ähnelt. Bau- oder funktionsgleiche Merkmale werden deshalb mit den gleichen Bezugszeichen bezeichnet.

Die in Fig. 7 bis 12 dargestellte zweite Ausführungsform unterscheidet sich von der in Fig. 1 bis 6 gezeigten ersten Ausführungsform letztlich nur in dem Rampenmechanismus, welcher dazu dient, den Niederhalter 34 beim Zusammenfahren der Schaufeln 16 in Richtung der Schaufelblattebene zu bewegen und dadurch mit einem aufzunehmenden Produkt 12 in Eingriff zu bringen.

Während der Rampenmechanismus des Produktgreifers gemäß erster Ausführungsform, wie voranstehend beschrieben, eine Drehbewegung, nämlich die Drehung des Hebelarms 26, in eine Linearbewegung des Niederhalters 34 umsetzt, ist der Rampenmechanismus des Produktgreifers gemäß zweiter Ausführungsform so ausgebildet, dass er eine erste Linearbewegung in eine zweite Linearbewegung, nämlich die Bewegung des Niederhalters 34, umsetzt.

Der Niederhalter 34 des Produktgreifers gemäß zweiter Ausführungsform umfasst hierzu einen im Wesentlichen kubischen oder quaderförmigen Grundkörper 48, an dessen zur Schaufelblattebene weisenden Unterseite die Kunststoffplatte 36 mit dem daran angebrachten Bandgurt 38 montiert ist.

Zwei gegenüberliegende Wände 50 des Grundkörpers 48 sind im Wesentlichen rechtwinklig zur Schaufelblattebene und parallel zur Bewegungsrichtung der Schaufeln 16 orientiert. Jede der Wände 50 weist in einem der Schaufelblattebene abgewandten oberen Eckbereich eine Schrägfläche 52 auf, die einer der Schaufeln 16 zugewandt ist.

An jeder Schaufel 16, genauer gesagt an jedem Schaufelblattträger 20, ist ein Rampenelement 54 fest angebracht, z.B. angeschraubt, welches sich im Wesentlichen parallel zur Bewegungsrichtung der Schaufeln 16 erstreckt. Jedes Rampenelement 54 weist an seinem schaufelabgewandten Ende eine Schrägfläche 56 auf, die mit einer der Schrägflächen 52 des Grundkörpers 48 derart zusammenwirkt, dass die mit den Schaufeln 16 verbundenen Rampenelemente 54 beim Zusammenfahren der Schaufeln 16 auf den Grundkörper 48 auflaufen, wodurch der Niederhalter 34 in Richtung der Schaufelblattebene bewegt wird.

Auch bei dieser Ausführungsform gilt, dass die Steigungsverläufe der Schrägflächen 52 des Niederhalters 34 und der Schrägflächen 56 der mit den Schaufeln 16 gekoppelten Rampenelemente 54 so gewählt sind, dass der Niederhalter 34 bereits niedergedrückt ist und eine Fixierkraft auf ein aufzunehmendes Produkt 12 aufübt, bevor die Schaufelblätter 18 mit dem Produkt 12 in Eingriff geraten. Ähnlich wie bei der ersten Ausführungsform können bei der zweiten Ausführungsform die Schrägflächen 52, 56 grundsätzlich ebenfalls einen anderen Steigungsverlauf aufweisen.

Bevorzugt sind die Schrägflächen 52 des Grundkörpers 48 und die Schrägflächen 56 der Rampenelemente 54 ferner so dimensioniert, dass sie außer Eingriff geraten, wenn der Niederhalter 34 maximal abgesenkt ist, so dass sich die Rampenelemente 54 über den Grundkörper 48 schieben können, um den Niederhalter 34 in seiner niedergedrückten Lage zu blockieren.

Ähnlich wie bei dem Produktgreifer gemäß erster Ausführungsform ist auch bei dem Produktgreifer gemäß zweiter Ausführungsform eine Zugfeder zwischen den Hebelarm 26 und den Niederhalter 34 geschaltet, die beim Absenken des Niederhalters gespannt wird und deren Rückstellkraft dafür sorgt, dass der Niederhalter sich wieder aufwärts bewegt und ein aufgenommenes Produkt freigibt, wenn sich die Schaufeln 16 zum Öffnen des Produktgreifers auseinander bewegen.

Ferner können ähnlich wie bei der ersten Ausführungsform auch bei der zweiten Ausführungsform die Rampenelemente 54 und der Grundkörper 48 über eine Kulissenführung zusammenwirken, wodurch es möglich wäre, auf ein zwischen dem Hebelarm 26 und dem Niederhalter 34 geschaltetes Federelement zu verzichten.

### Bezugszeichenliste

- 10: Produktauflage
- 12: Produkt
- 14: Rahmenstruktur
- 16: Schaufel
- 18: Schaufelblatt
- 20: Schaufelblattträger
- 22: Zylinder
- 24: Kolben
- 26: Hebelarm
- 28: Ende
- 30: Verbindungsarm
- 32: Pfeil
- 34: Niederhalter
- 36: Kunststoffplatte
- 38: Bandgurt
- 40: Rampenring
- 42: Rampe
- 44: Nocken
- 46: Schrägfläche
- 48: Grundkörper
- 50: Wand
- 52: Schrägfläche
- 54: Rampenelement
- 56: Schrägfläche

## Patentansprüche

1. Produktgreifer zum Aufnehmen eines Produkts (12), umfassend
zwei Schaufelblätter (18),
ein Antriebsmittel, um die Schaufelblätter (18) zwischen einer ersten Position, in welcher die Schaufelblätter (18) auf gegenüberliegenden Seiten des aufzunehmenden Produkts (12) auf eine Auflage (10) für das aufzunehmende Produkt (12) aufsetzbar sind, und einer zweiten Position zu bewegen, in welcher sich die Schaufelblätter (18) zumindest teilweise unter dem aufzunehmenden Produkt (12) befinden, und
einen Niederhalter (34) zum Fixieren des aufzunehmenden Produkts (12), während die Schaufelblätter (18) darunter bewegt werden, wobei der Niederhalter (34) oberhalb einer durch die Schaufelblätter (18) definierten Schaufelblattebene angeordnet ist,
**gekennzeichnet durch**
einen Rampenmechanismus, **durch** welchen die Bewegung der Schaufelblätter (18) relativ zueinander mit einer Bewegung des Niederhalters (34) relativ zu der Schaufelblattebene gekoppelt ist.

2. Produktgreifer nach Anspruch 1,
**dadurch gekennzeichnet,dass**
der Rampenmechanismus so ausgebildet ist, dass der Niederhalter (34) mit dem aufzunehmenden Produkt (12) in Eingriff gerät bevor sich die Schaufelblätter (18) darunter bewegen.

3. Produktgreifer nach Anspruch 1 oder 2,
**dadurch gekennzeichnet, dass**
der Rampenmechanismus ausgebildet ist, um eine Rotation oder eine Translation jeweils in eine Translation umzusetzen.

4. Produktgreifer nach einem der Ansprüche 1 bis 3,
**dadurch gekennzeichnet, dass**
der Rampenmechanismus zwei sich um eine, insbesondere zur Schaufelblattebene senkrechte, Drehachse relativ zueinander verdrehende Teile (26, 44) umfasst.

5. Produktgreifer nach Anspruch 4,
**dadurch gekennzeichnet, dass**
ein erster Teil des Rampenmechanismus einen, insbesondere konzentrisch mit der Drehachse angeordneten, Rampenring (40) des Niederhalters (34) umfasst.

6. Produktgreifer nach Anspruch 4 oder 5,
**dadurch gekennzeichnet, dass**
ein zweiter Teil des Rampenmechanismus mit einem Hebelarm (26) verbunden ist, welcher, insbesondere um die Drehachseachse, verschwenkbar ist.

7. Produktgreifer nach Anspruch 6,
**dadurch gekennzeichnet, dass**
der zweite Teil des Rampenmechanismus mindestens einen zur Schaufelblattebene weisenden Nocken (44) umfasst.

8. Produktgreifer nach Anspruch 7,
**dadurch gekennzeichnet, dass**
der oder jeder Nocken (44) an einer auf einen ersten Teil (40) des Rampenmechanismus auflaufenden Seite eine Schrägfläche (46) aufweist.

9. Produktgreifer nach einem der Ansprüche 1 bis 3,
**dadurch gekennzeichnet, dass**
der Rampenmechanismus zwei sich linear zueinander verschiebende und über Schrägflächen miteinander in Eingriff stehende Teile umfasst.

10. Produktgreifer nach Anspruch 9,
**dadurch gekennzeichnet, dass**
ein erster Teil des Rampenmechanismus mindestens eine an dem Niederhalter (34) ausgebildete Schrägfläche (52) umfasst.

11. Produktgreifer nach Anspruch 9 oder 10,
**dadurch gekennzeichnet, dass**
ein zweiter Teil (54) des Rampenmechanismus mit einem der Schaufelblätter (18) fest verbunden ist und insbesondere mit jedem Schaufelblatt (18) jeweils ein zweiter Teil (54) des Rampenmechanismus fest verbunden ist.

12. Produktgreifer nach Anspruch 11,
**dadurch gekennzeichnet, dass**
der oder jeder zweite Teil des Rampenmechanismus durch ein sich im Wesentlichen parallel oder schräg zur Schaufelblattebene erstreckendes Rampenelement (54) gebildet ist, das an seinem dem zugeordneten Schaufelblatt (18) abgewandten Ende eine Schrägfläche (56) aufweist.

13. Produktgreifer nach Anspruch 12,
**dadurch gekennzeichnet, dass**
die Abmessung der Schrägfläche (56) des Rampenelements (54) parallel zur Schaufelblattebene gesehen kürzer als die Distanz zwischen der ersten und zweiten Position der Schaufelblätter (18) ist.

14. Produktgreifer nach einem der vorstehenden Ansprüche,
**dadurch gekennzeichnet, dass**
der Niederhalter (34) drehfest an einer Rahmenstruktur (14) des Produktgreifers angebracht ist.

15. Produktgreifer nach einem der vorstehenden Ansprüche,
**dadurch gekennzeichnet, dass**
der Niederhalter (34) entgegen der Rückstellkraft eines Federelements auf die Schaufelblattebene zu bewegbar ist.

## Claims

1. A product gripper for the taking up of a product (12), comprising
two vane blades (18);
a drive means to move the vane blades (18) between a first position, in which the vane blades (18) can be placed onto a support (10) for the product (12) to be taken up at oppositely disposed sides of the product (12) to be taken up, and a second position, in which the vane blades (18) are located at least partly beneath the product (12) to be taken up; and
a downholder (34) for the fixing of the product (12) to be taken up while the vane blades (18) are moved beneath it, with the downholder (34) being arranged above a vane blade plane defined by the vane blades (18),
**characterized by**
a ramp mechanism, by which the movement of the vane blades (18) relative to one another is coupled to a movement of the downholder (34) relative to the vane blade plane.

2. A product gripper in accordance with claim 1, **characterized in that** the ramp mechanism is designed so that the downholder (34) comes into engagement with the product (12) to be taken up before the vane blades (18) move beneath it.

3. A product gripper in accordance with claim 1 or claim 2, **characterized in that** the ramp mechanism is designed to convert a rotation or a translation into a translation in each case.

4. A product gripper in accordance with any one of claims 1 to 3, **characterized in that** the ramp mechanism includes two parts (26, 44) rotating relative to one another about an axis of rotation, in particular an axis of rotation perpendicular to the vane blade plane.

5. A product gripper in accordance with claim 4, **characterized in that** a first part of the ramp mechanism includes a ramp ring (40) of the downholder (34) which is in particular arranged concentrically to the axis of rotation.

6. A product gripper in accordance with claim 4 or claim 5, **characterized in that** a second part of the ramp mechanism is connected to a lever arm (26) which is pivotable, in particular about the axis of rotation.

7. A product gripper in accordance with claim 6, **characterized in that** the second part of the ramp mechanism includes at least one cam (44) facing the vane blade plane.

8. A product gripper in accordance with claim 7, **characterized in that** the or each cam (44) has a sloped surface (46) at a side running onto a first part (40) of the ramp mechanism.

9. A product gripper in accordance with any one of claims 1 to 3, **characterized in that** the ramp mechanism includes two parts which are displaced in a linear manner to one another and are in mutual engagement via sloped surfaces.

10. A product gripper in accordance with claim 9, **characterized in that** a first part of the ramp mechanism includes at least one sloped surface (52) formed at the downholder (34).

11. A product gripper in accordance with claim 9 or claim 10, **characterized in that** a second part (54) of the ramp mechanism is fixedly connected to one of the vane blades (18) and in particular a respective second part (54) of the ramp mechanism is fixedly connected to each vane blade (18).

12. A product gripper in accordance with claim 11, **characterized in that** the or each second part of the ramp mechanism is formed by a ramp element (54) extending substantially in parallel or obliquely to the vane blade plane and having a sloped surface (56) at its end remote from the associated vane blade (18).

13. A product gripper in accordance with claim 12, **characterized in that** the dimension of the sloped surface (56) of the ramp element (54) viewed parallel to the vane blade plane is shorter than the distance between the first and second positions of the vane blades (18).

14. A product gripper in accordance with any one of the preceding claims, **characterized in that** the downholder (34) is rotationally fixedly attached to a frame structure (14) of the product gripper.

15. A product gripper in accordance with any one of the preceding claims, **characterized in that** the downholder (34) can be moved toward the blade vane plane against the restoring force of a spring element.

## Revendications

1. Dispositif de préhension de produit pour prendre un produit (12), comprenant
deux plaques-pelles (18),
un organe d'entraînement, afin de déplacer les plaques-pelles (18) entre une première position dans laquelle les plaques-pelles (18) peuvent être posées sur des côtés opposés du produit à prendre (12) sur un support (10) pour le produit à prendre (12), et une seconde position dans laquelle les plaques-pelles (18) se trouvent au moins partiellement au-dessous du produit à prendre (12), et
un organe de maintien vers le bas (34) pour fixer le produit à prendre (12) pendant que les plaques-pelles (18) sont déplacées au-dessous de celui-ci, ledit organe de maintien vers le bas (34) étant agencé au-dessus d'un plan de pelle défini par les plaques-pelles (18),
**caractérisé par**
un mécanisme à rampe au moyen duquel le déplacement des plaques-pelles (18) l'une par rapport à l'autre est couplé à un mouvement de l'organe de maintien vers le bas (34) par rapport au plan de pelle.

2. Dispositif de préhension de produit selon la revendication 1,
**caractérisé en ce que**
le mécanisme à rampe est réalisé de telle façon que l'organe de maintien vers le bas (34) parvient en engagement avec le produit à prendre (12) avant que les plaques-pelles (18) se déplacent au-dessous de celui-ci.

3. Dispositif de préhension de produit selon la revendication 1 ou 2,
**caractérisé en ce que** le mécanisme à rampe est réalisé pour convertir une rotation ou une translation respectivement en une translation.

4. Dispositif de préhension de produit selon l'une des revendications 1 à 3,
**caractérisé en ce que** le mécanisme à rampe comprend deux parties (26, 44) qui tournent l'une par rapport à l'autre autour d'un axe de rotation, en particulier perpendiculaire au plan de pelle.

5. Dispositif de préhension de produit selon la revendication 4,
**caractérisé en ce qu'**une première partie du mécanisme à rampe comprend une bague à rampe (40), agencée en particulier concentriquement à l'axe de rotation, de l'organe de maintien vers le bas (34).

6. Dispositif de préhension de produit selon la revendication 4 ou 5,
**caractérisé en ce qu'**une seconde partie du mécanisme à rampe est reliée à un bras de levier (26), lequel est capable de pivoter en particulier autour de l'axe de rotation.

7. Dispositif de préhension de produit selon la revendication 6,
**caractérisé en ce que** la seconde partie du mécanisme à rampe comprend au moins une came (44) dirigée vers le plan de pelle.

8. Dispositif de préhension de produit selon la revendication 7,
**caractérisé en ce que** la came ou chaque came (44) comporte une surface oblique (46) sur un côté qui monte sur une première partie (40) du mécanisme à rampe.

9. Dispositif de préhension de produit selon l'une des revendications 1 à 3,
**caractérisé en ce que** le mécanisme à rampe comprend deux parties en translation linéaire l'une par rapport à l'autre et en engagement l'une avec l'autre via des surfaces obliques.

10. Dispositif de préhension de produit selon la revendication 9,
**caractérisé en ce qu'**une première partie du mécanisme à rampe comprend au moins une surface oblique (52) réalisée sur l'organe de maintien vers le bas (34).

11. Dispositif de préhension de produit selon la revendication 9 ou 10,
**caractérisé en ce qu'**une seconde partie (54) du mécanisme à rampe est fermement reliée à l'une des plaques-pelles (18), et en particulier une seconde partie (54) respective du mécanisme à rampe est fermement reliée à chaque plaque-pelle (18).

12. Dispositif de préhension de produit selon la revendication 11,
**caractérisé en ce que** la seconde partie ou chaque seconde partie du mécanisme à rampe est formée par un élément à rampe (54) qui s'étend sensiblement parallèlement ou en oblique par rapport au plan de pelle, qui comporte une surface oblique (56) à son extrémité détournée de la plaque-pelle (18) qui lui est associée.

13. Dispositif de préhension de produit selon la revendication 12,
**caractérisé en ce que** la dimension de la surface oblique (56) de l'élément à rampe (54), vue parallèlement au plan de pelle, est plus courte que la distance entre la première et la seconde position des plaques-pelles (18).

14. Dispositif de préhension de produit selon l'une des revendications précédentes,
**caractérisé en ce que** l'organe de maintien vers le bas est monté solidairement en rotation sur une structure de cadre (14) du dispositif de préhension de produit.

15. Dispositif de préhension de produit selon l'une des revendications précédentes,
**caractérisé en ce que** l'organe de maintien vers le bas (34) est déplaçable vers le plan de pelle à l'encontre de la force de rappel d'un élément à ressort.
